(19) Europäisches Patentamt
European Patent Office
Office européen des brevets

(11) **EP 3 110 129 A1**

(12) **EUROPEAN PATENT APPLICATION**

(43) Date of publication:
**28.12.2016 Bulletin 2016/52**

(51) Int Cl.:
*H04N 1/60* (2006.01)  *H04N 9/67* (2006.01)

(21) Application number: **16175989.9**

(22) Date of filing: **23.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.06.2015 EP 15306010**

(71) Applicant: **Thomson Licensing 92130 Issy-les-Moulineaux (FR)**

(72) Inventors:
• **PORÉE, Corinne**
  **35576 CESSON-SÉVIGNÉ (FR)**
• **STAUDER, Jurgen**
  **35576 CESSON-SÉVIGNÉ (FR)**
• **ORHAND, Anita**
  **35576 CESSON-SÉVIGNÉ (FR)**

(74) Representative: **Browaeys, Jean-Philippe TECHNICOLOR 1-5, rue Jeanne d'Arc 92130 Issy-les-Moulineaux (FR)**

(54) **COLOR GAMUT MAPPING BASED ON THE MAPPING OF CUSP COLORS OBTAINED THROUGH SIMPLIFIED CUSP LINES**

(57)    For the mapping in a non-linear color space of source colors belonging to a same constant-hue leaf, a lightness mapping function can be used which is based on a cusp lightness condition stating that a source cusp color of this leaf should be mapped into a corresponding target cusp color of this leaf. Source and target cusp colors are determined by the intersection of a source and target cusp lines with this leaf. The invention describes a method providing simplified source and target cusp lines based on a convex hull algorithm which are used instead to determine modified source and target cusp colors for the definition of the lightness mapping function.

Fig.3

EP 3 110 129 A1

**Description**

Technical Field

The invention concerns a method for mapping colors of a source color gamut into a target color gamut that is adapted to the cusp colors of the source and target color gamut.

Background Art

The aim of a color gamut mapping is to redistribute the source colors belonging to a source color gamut (for example the extended color gamut of a film) into a target color gamut (for example the color gamut of a standard television monitor). As the shape and boundaries of target color gamut are generally different from those of the source color gamut, at least some of the target colors that are obtained after such a mapping are different from their corresponding source colors.

An application area of color gamut mapping is notably video content production and post-production. For example, an original version of a video content need to be converted into specific versions adapted for different types of reproduction or transmission : for example, a specific version for cinema, another for television, and a third one for internet. These different versions can be prepared by manual color correction or/and by application of gamut and tone mapping algorithms.

Among the requirements for color gamut mapping are notably:

- preservation of color neighborhood and order, absence of color banding and false contours, in order, notably, to prevent from incoherent reproduction of grey and color ramps;
- continuity of color and absence of visible quantization or clipping errors, in order, notably, to prevent from banding and false contours;
- separate control for lightness, hue and saturation for keeping the full artistic control on how colors are modified, and for allowing the formulation of a higher, semantic level of artistic intents.

In order to define a color gamut mapping, a gamut boundary description (GBD) of the source color gamut and of the target color gamut is generally used. Such a GBD of a color gamut defines the boundary surface of this color gamut in a color space. GBDs comprises generally explicit, generic 3D representations such as triangle meshes or volume models that form a gamut wireframe. For instance, a GBD of a color gamut can be based on a mesh of triangles, each triangle being defined by its three vertices in the color space of this GBD. These vertices are colors located on the boundary of the color gamut.

Among known methods for calculating a GBD, the following groups are emphasized:

- A first group named "colorant space" methods requires device-dependent and device-independent color coordinates as input. A GBD is calculated by using device dependent coordinates with either minimum or maximum values, see R. J. Rolleston, "Visualization of colorimetric calibration", In Proceedings of SPIE, volume 1912, pages 299-309, 1993.
- A second group using convex methods such as the convex hull method, which requires as input a more or less exhaustive set of colors represented in device independent color space belonging to the color gamut. The assumption is that a convex hull includes all these colors.
- A third group using non-convex methods such as alpha shapes and discrete flow complex which need the same input data but allow a degree of non-convexity.

Some convex and non-convex methods are introduced by Cholewo and Love in their paper entitled "Gamut boundary determination using alpha-shapes" published at the Color Imaging Conference in 1999. In praxis, color gamut boundaries are often non-convex because either of the nature of the color device - for example printers with subtractive color reproduction - or because of the nonlinearities of the color space - for example CIELAB.

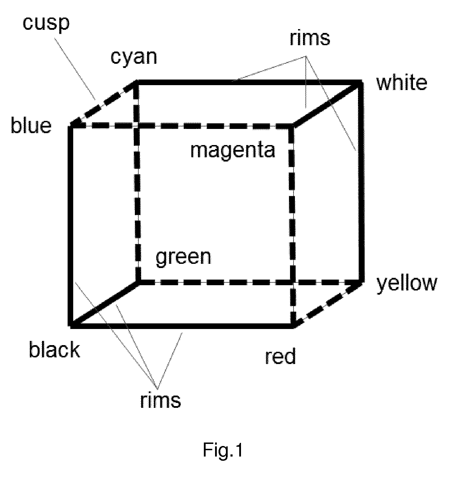

As illustrated by dotted lines on figure 1 in a RGB color space, in case of a color gamut of a trichromatic display or a trichromatic camera, the corresponding cusp lines usually correspond to singular lines ("edges") linking each primary color of this display or camera with a secondary color having this primary color as a component, namely a singular line linking: red with yellow, red with magenta, green with yellow, green with cyan, blue with cyan and blue with magenta. The "cusp line" of a color gamut is a line joining cusp colors. When the color gamut is represented in a Lab or JCh color space, a cusp color is a color of maximum Chroma (i.e. maximum saturation) in a plane defined by a constant hue in this color space. Such a plane is generally named "constant hue leaf". More generally, cusp colors correspond to singular points ("vertices") or singular lines ("edges") on the boundary surface that limits a color gamut. The cusp line of a color gamut can be generally modeled as a line forming a closed polygon on the gamut boundary of this color gamut.

As illustrated by solid lines on figure 1, the "rims" of a **color** gamut correspond to the ridges of this color gamut linking the white point of this color gamut to the secondary colors and to the ridges linking the black point of this color gamut to the primary colors. For example, a first yellow rim of a color gamut starts at the white point and ends at the yellow secondary color. The colors on this first yellow rim include white, yellowish whites, pales yellows, saturated yellows and finally the yellow secondary color itself. Such as the cusp line of a color gamut, also the rims of a color gamut include generally singular points, that correspond generally with non-continues curvature of the gamut boundary of the color gamut.

On figure 1, cusp lines (dotted lines) and rims (solid lines) of the color gamut are by definition straight lines, because these lines are represented in the RGB color space defined by the device having those primary and secondary colors. The same lines are generally not straight when represented for instance in a L*a*b* color space.

When trying to define a method of color gamut mapping (or algorithm : "GMA") source colors inside a source color gamut (having its own source cusp line and source rims) into target colors such they are located inside a target color gamut (having its own target cusp line and target rims), in order to take advantage of the whole range of colors in the target color gamut, it is known to define the GMA according different conditions among which the following cusp mapping condition: any source cusp color should be mapped into a target cusp color. Such color mapping methods are known as cusp color gamut mapping.

US2007/236761 discloses a mapping method using the cusp colors of a color gamut. Cusp colors are interpolated from primary and secondary colors of the color gamut. In the disclosed method, a color ([0104] "point A") is mapped (([0104] "chroma dependent lightness mapping") to a mapped color ([0104] "point B"). The mapped color has a lightness that is closer to the lightness of a cusp point of the constant-hue leaf of the color to map ([0104] "lightness compression toward primary cusp point"). This cusp point is that of a target gamut and is identical to the cusp point of a source gamut of the same hue leaf (Figure 12b: "both cusp points") after a cusp point mapping in this constant-hue leaf ([0059] "the source primary cusp point is mapped to the destination primary cusp point") and after mapping of black and white points of the source gamut to the black and white points, respectively, of the target gamut (Figure 11: "lightness rescaling"). The lightness mapping depends on the unique black point, the unique white point and the unique cusp point in the constant-hue leaf in which the mapping is performed.

US2005/248784 discloses a color gamut mapping method called shear mapping that maps in a constant-hue LC leaf the cusp of the source gamut to the cusp of the target gamut. However, after the shear mapping, other colors that the cusp colors may still lie outside of the target color gamut. For such a situation, US2005/248784 discloses to further map colors that lie outside the target color gamut to the closest colors of the target color gamut, see figure 10 of US2005/248784. The document EP2375719 discloses also such an additional mapping step.

In EP2375719, the GBD that is used to describe a color gamut is based on a mesh of triangles, each triangle being defined by the position of its three vertices in the mapping color space, these vertices being colors located on the boundary of the color gamut. Such a GBD can describe color gamuts that are convex or non-convex. Once the GBD is computed, cusp colors should be searched on the boundary of this color gamut, in order to get a line of cusp colors forming a polygon surrounding the color gamut. To get a description of such a cusp line, starting from the vertex of the triangle of the GBD having the highest Chroma (or saturation), neighboring vertices are successively searched according to a quality criterion allowing to qualify each neighboring vertex as a cusp color of the searched cusp line. In this document, this quality criterion is a combination of five criteria: saturation, lightness similarity, hue angle increase, collenearity and curvature. A drawback of this method of description of the cusp line of a color gamut from its GBD is that it requires the calculation of this quality criterion for each cusp color of the cusp line to describe.

Another drawback of the above mapping methods working in constant-hue leaves is that, in case of non-convex color gamuts and when the curvature of this gamut varies in hue direction with high amplitude in the neighborhood of the cusp line, discontinuities of mapping operations may occur in this neighborhood.

Summary of invention

An object of the invention is to avoid the aforementioned drawbacks.

For this purpose, a subject of the invention is a method of color gamut mapping source colors into targets colors from a source color gamut towards a target color gamut in a mapping color space that can be partionned in 2D constant-hue leaves having axes for lightness and for chroma,

said method comprising mapping the lightness L of each source color having a chroma C and a hue h into a lightness L' of a target color according to a lightness mapping function $L' = f(C,L)$ defined in the constant-hue leaf of hue h such as to meet a cusp lightness condition according to $f\left(C_{CUSP}^{M-SOURCE}, L_{CUSP}^{M-SOURCE}\right) = L_{CUSP}^{M-TARGET}$, where $L_{CUSP}^{M-SOURCE}$ and $C_{CUSP}^{M-SOURCE}$ are respectively the lightness and the chroma of a modified source cusp color belonging this leaf, where $L_{CUSP}^{M-TARGET}$ is the lightness of a modified target cusp color belonging this leaf,

wherein said modified source cusp color and said modified target cusp color correspond respectively to the intersection of a simplified source cusp line with said constant-hue leaf and to the intersection of a simplified target cusp line with said constant-hue leaf.

In a first variant, said simplified source cusp line is obtained such that its projection on a plane of constant lightness corresponds to the smallest convex polygon enclosing the projections in said plane of vertices describing said source color gamut, and said simplified target cusp line is obtained such that its projection on a plane of constant lightness corresponds to the smallest convex polygon enclosing the projections in said plane of vertices describing said target color gamut.

Preferably, said color gamut mapping method comprises computing said simplified source cusp line and/or said simplified target cusp line by using a 2D convex hull algorithm in a plane of constant lightness.

In a second variant:

- said color gamut mapping method comprises obtaining said simplified source cusp line by projecting gamut colors describing said source color gamut in a plane of constant lightness, computing said projected gamut colors with a 2D convex hull algorithm resulting in a convex plane polygon formed by selected projected gamut colors, and retroprojecting said selected projected gamut colors resulting in source cusp colors forming a polygon describing said simplified source cusp line, and/or
- said color gamut mapping method comprises obtaining said simplified target cusp line by projecting gamut colors describing said target color gamut in a plane of constant lightness, computing said projected gamut colors with a 2D convex hull algorithm resulting in a convex plane polygon formed by selected projected gamut colors, and retroprojecting said selected projected gamut colors resulting in target cusp colors forming a polygon describing said simplified target cusp line.

Again, using a 2D convex hull algorithm instead of a 3D convex hull algorithm allows to simplify the process and to save computing resources.

Such an obtaining method to search a simplified source cusp line and a simplified target cusp line is advantageously very simple to implement. Advantageously, this obtaining method does not need calculation of a quality criterion to qualify a gamut color to be a cusp color.

In summary, for the mapping in a non-linear color space of source colors belonging to a same constant-hue leaf, a lightness mapping function can be used which is based on a cusp lightness condition stating that a source cusp color of this leaf should be mapped into a corresponding target cusp color of this leaf. Source and target cusp colors are determined by the intersection of a source and target cusp lines with this leaf. The invention describes a method providing simplified source and target cusp lines based on a 2D convex hull algorithm which are used instead to determine modified source and target cusp colors for the definition of the lightness mapping function. Advantageously, using a 2D convex hull algorithm instead of a 3D convex hull algorithm allows to simplify the process and to save computing resources.

Preferably at least one among said source color gamut and said target color gamut is non-convex.

Preferably there is at least one constant-hue leaf in which the modified source cusp color is located out of said source color gamut and/or in which the modified target cusp color is located out of said target color gamut.

A subject of the invention is also a color mapping device for mapping source colors of a content which are provided in a source color gamut into targets colors of a target color gamut, comprising :

- a simplified-cusp calculation module configured to obtain a simplified source cusp line such that its projection on a plane of constant lightness corresponds to the smallest convex polygon enclosing the projections in said plane of vertices describing said source color gamut and to obtain a simplified target cusp line such that its projection on a plane of constant lightness corresponds to the smallest convex polygon enclosing the projections in said plane of vertices describing said target color gamut,
- a lightness-mapping function definition module configured to define, for all source colors located in a same constant-hue leaf of hue h , a lightness-mapping function $L'= f(C, L)$ adapted to lightness-map the lightness L of any of these source colors having a chroma C into a lightness L' and meeting a cusp lightness condition according to

$$f\left(C_{CUSP}^{M-SOURCE}, L_{CUSP}^{M-SOURCE}\right) = L_{CUSP}^{M-TARGET}$$ , where $L_{CUSP}^{M-SOURCE}$ and $C_{CUSP}^{M-SOURCE}$ are respectively the lightness and the chroma of a modified source cusp color belonging to said leaf, where $L_{CUSP}^{M-TARGET}$ is the lightness of a modified target cusp color belonging to said leaf,

wherein said modified source cusp color and said modified target cusp color correspond respectively to the intersection of said constant-hue leaf with the simplified source cusp line provided by said simplified-cusp calculation module and to the intersection of said constant-hue leaf with the simplified target cusp line provided by said simplified-cusp calculation module,

- a lightness-mapping module adapted to apply lightness-mapping function *f(C, L)* provided by lightness-mapping function definition module to said source colors located in said constant-hue leaf.

A subject of the invention is also a processor readable medium having stored therein instructions for causing a processor to perform the above method of color gamut mapping and a computer-readable program comprising computer-executable instructions to enable a computer to perform the above method of color gamut mapping.
The cusp-oriented color gamut mapping method according to the invention is notably applicable to professional color processing software, when the colorist needs to be free to choose any chroma variations.

Brief description of drawings

The invention will be more clearly understood on reading the description which follows, given by way of non-limiting example and with reference to the appended figures in which:

- Figure 1 illustrate, in a RGB color space, the cusp line and the rims of a color gamut;
- Figure 2 illustrates a non-convex source color gamut in the Lab color space;
- Figure 3 is a diagram illustrating an embodiment of a color gamut mapping method according to the invention;
- Figure 4 illustrates the mapping of some colors according to the embodiment illustrated on figure 3.

Description of embodiments

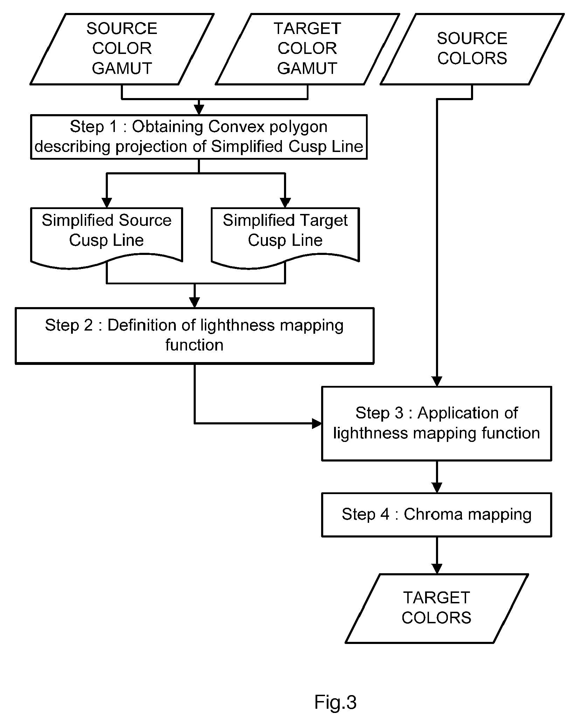

The functions of the various elements shown on the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage. Other hardware, conventional and/or custom, may also be included.
Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.
A specific embodiment of the cusp color gamut mapping method according to the invention will now be described in reference to figure 3.
As **mapping color space,** the CIE 1976 Lab color space is chosen. A Lab color space is a color-opponent space that is perceptually uniform, with dimension L for lightness and a and b for the color-opponent dimensions. The red/green opponent primary colors are represented along the *a* axis, with green at negative *a* values and red at positive *a* values. The yellow/blue opponent secondary/primary colors are represented along the b axis, with blue at negative b values and yellow at positive b values.
In this color space, colors can also be represented by polar coordinates, i.e. in a LCh mode, with L for the same lightness, the hue angle h according to

$$h = \begin{cases} atan(b/a) & a > 0 \wedge b > 0 \\ \pi/2 - atan(a/b) & a \leq 0 \wedge b > 0 \\ 3\pi/2 - atan(a/b) & a > 0 \wedge b \leq 0 \\ \pi + atan(b/a) & a \leq 0 \wedge b \leq 0 \end{cases}$$

i.e. the angle between the vector having a, b as coordinates and the a-axis, $C = \sqrt{a^2 + b^2}$ corresponding to the chroma, i.e. the saturation of the color. The higher the C value the more saturated is the color. The hue angle may be also named $\alpha_H$.

Other color spaces such as the appearance-based space JCh according to CIECAM-02 can be used for the mapping. Furthermore, the below embodiment concerns a hue-preserving cusp color gamut mapping. This means that the color mapping is not actually carried out in three dimensions in Lab space but in two dimensions in a constant-hue leaf of the Lab space, i.e. in a 2D LC color space. The hue defining the constant-hue leaf in which the color mapping is to be performed is chosen to be the hue of the source color to be mapped.

The source GBD used to describe the source color gamut comprising source colors to map is based in a manner known per se for instance on a mesh of triangles, each triangle being defined by the position of its three vertices in the mapping color space, these vertices being source colors located on the boundary of the color gamut. The source color gamut can correspond to a specific or standard display device such as a LCD or an OLED panel, to a specific content to map, to an image capture device such as a camera or a scanner, or to any other color device.

The target GBD used to describe the target color gamut that should comprises all mapped colors is also based in a manner known per se for instance on a mesh of triangles, each triangle being also defined by the position of its three vertices in the mapping color space, these vertices being target colors located on the boundary of the color gamut. The target color gamut can correspond for instance to a specific or standard display device or to a printer.

In the embodiment below, it is assumed that the two Gamut Boundary Descriptions are **non-convex,** but the invention can be used even if only one or no Gamut Boundary Description is non-convex.

Furthermore, the primary colors, the secondary colors, the black point and the white point of the two gamuts are supposed to be known.

1<sup>st</sup> step: Obtaining simplified cusp lines of the source and target color gamuts

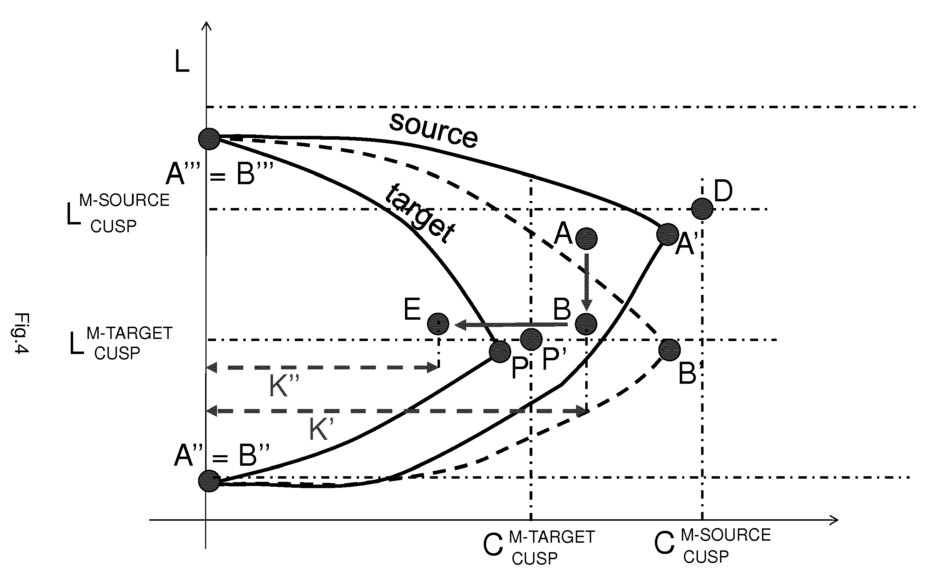

Generally, the usual actual cusp line of a color gamut is defined by a line joining actual cusp colors of this color gamut, where each actual cusp color is defined to be the color with highest chroma C in the constant-hue leaf of this color gamut having the same hue as this cusp color. On the constant-hue leaf illustrated on figure 4 where solid lines represent the intersection of the source and target color gamut with this leaf, the actual source cusp color of the source color gamut is referenced A' and the actual target cusp color of the target color gamut is referenced P.

Using GBDs based on triangles represented by their vertices as defined above, the actual cusp line of a color gamut can be for instance described by a series of vertices of these triangles forming a closed polygon that circumscribes in a certain manner the gamut boundary description. This polygon is generally not plane.

To obtain such an actual cusp line, one can use for instance the method described by Stauder et. al. in their article entitled "Gamut Mapping for Motion Picture" published at the Conference on Colour in Graphics, Imaging and Vision, June 14-18, 2010, which implements notably the following steps :

1. Detection of a first current cusp vertex as the vertex of the gamut boundary description (GBD) having the highest color saturation C;
2. For each of neighboring vertices of this GBD located in the neighborhood of this current cusp vertex, calculation of the value of a quality criterion, said neighborhood being defined by all vertices that are linked to the current cusp vertex by an edge of a triangle of this GBD;
3. From these neighboring vertices, selection of the vertex of the neighborhood having the highest value of this quality criterion as being a cusp color of the cusp line,
4. If this selected vertex satisfies a stop criterion, the whole cusp line of this color gamut is considered as obtained; if the stop criterion is not satisfied, the selected vertex is overtaken as current cusp vertex and steps 2 to 4 above are reiterated up to a last selected vertex satisfies the stop criterion.

Examples of quality criterion and of stop criterion are given in the Stauder's publication quoted above.

According to the invention, a **simplified cusp line** will be used as the basis of a cusp color gamut mapping instead of an actual cusp line for instance as computed above. The simplified cusp line is characterized in that its projection into a specific plane (in this embodiment: plane ab of constant lightness) is the smallest convex curve (in this embodiment: polygon) enclosing the projected color gamut (in this embodiment: GBD) in this plane. In this specific plane, the saturation of a color is measured by the distance of the color from the origin (in this embodiment: $C = \sqrt{a^2 + b^2}$ ).

A method of computing such a simplified cusp line will now be explained and used in this embodiment of the invention. This method can be used for both the source and target color gamut whereas they are convex or non-convex. Advantageously, when a color gamut is non-convex, the simplified cusp lines obtained by this method are always convex, as opposed with the actual cusp lines obtained by the above method described in reference to the Stauder's publication. Advantageously, this new method does not pre-require a step of computing the actual cusp lines as described above, because it provides directly a simplified cusp line.

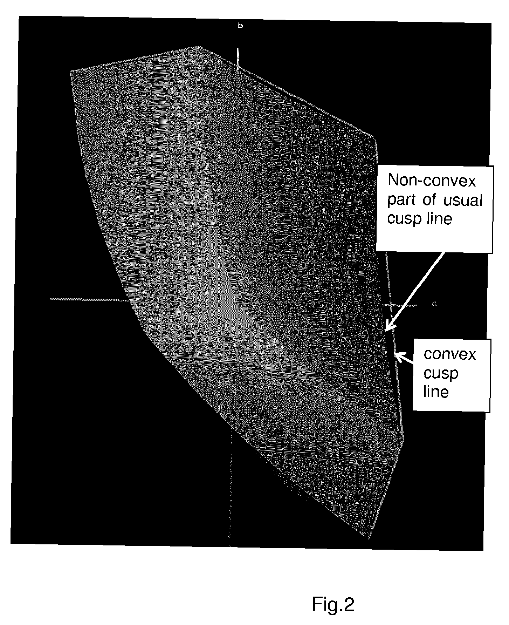

Figure 2 illustrates a source GBD of a non-convex color gamut in the Lab color space, where the ab plane corresponds to the plane of constant lightness of the figure. When the boundary of this color gamut is described by gamut colors which are for instance vertices of triangles as explained above, projections of these gamut colors or vertices on the plane of constant lightness of the figure form a projected gamut. The border of the right part of this projected gamut shows a non-convex shape indicated by an arrow. The smallest convex polygon enclosing the contour of this projected gamut will now be directly calculated as a convex hull in this plane. To implement the direct calculation of such a convex hull, known 2D convex hull computing methods are used, as those described for instance in chapter 22 of "Handbook of Discrete and Computational Geometry" (2004) from Jacob E. Goodman and Joseph O'Rourke. A description of another convex hull incremental algorithms is given in §1.6 of Jeff Erickson's 2002 "Computational Geometry, Lecture 1: Convex Hulls". One of the basic aims of such a 2D convex hull computing is to suppress vertices of a polygon that introduce concavity in order to get a convex polygon describing a simplified cusp line that is searched which is based on cusp colors forming this polygon. Advantageously, using a 2D convex hull algorithm instead of a 3D convex hull algorithm allows to simplify the process and to save computing resources.

A summary of such a method applied to a color gamut is given below. This method consists of building a convex hull from all colors describing a projection on a plane ab of constant lightness of this color gamut. Such colors are named projected colors. When applied to the source color gamut, it means that each gamut color $L*_{GAMUT}^{SOURCE}, a*_{GAMUT}^{SOURCE}, b*_{GAMUT}^{SOURCE}$ used for the description of the source color gamut is projected into a projected gamut color having the following coordinates in the a*b* plane : $a*_{GAMUT}^{SOURCE}, b*_{GAMUT}^{SOURCE}$ . The method starts with a first polygon formed by three of these projected colors which are chosen as non-aligned in the ab plane. Of course, this first polygon is convex. This polygon can be seen as a list of three projected colors in specific order : projected color 1, projected color 2 and projected color 3, or as a list of three segments : a first segment joining projected color 1 and projected color 2, a second segment joining projected color 2 and projected color 3, and the last segment joining projected color 3 and projected color 1. Such an ordering of the three segments is chosen that the three segments are ordered clockwise in the ab plane. All the remaining projected colors describing a projection of the color gamut on the ab plane are then considered, one after another. For each of these remaining projected colors, it is evaluated whereas the projected color is outside or inside the polygon. This is done for example by scouring the polygon clockwise following the ordering of the segments, and searching for a segment of the polygon which has the projected color on its left, when this segment is oriented along the scouring direction. If there is not such a segment, this projected color is no more considered. If there is actually such a segment, this projected color is selected to be added to the polygon between the two projected colors delimiting this segment, and this segment is replaced by two segments, a segment starting at the same projected color as the previous segment and ending at the added projected color and another segment starting at the added projected color and ending at the same projected color as the previous segment. The new polygon which is then obtained by replacing the first segment by these two segments is then scoured clockwise and counterclockwise from the new projected color added in the polygon, in order to suppress concavities: each projected color of this new polygon which forms an interior angle with its two neighbor projected colors that is superior to 180° is suppressed from the polygon. A new set of projected colors is then obtained corresponding to a new polygon which is still convex. A second remaining projected color describing the projected gamut color is then processed in the same way, and the same process is repeated until all projected gamut colors are processed, one after the other.

The last polygon that is obtained at the end of the process above describes a projection of the so-called "simplified cusp line" that is searched. This last polygon is convex. All vertices of this last polygon are colors projected from the gamut colors describing the color gamut. As described above, these gamut colors correspond for instance to vertices of triangles. These projected colors are **selected** according to the process above. To get finally the searched simplified cusp line, each selected projected color forming the last polygon is then "retroprojected" into its corresponding gamut color, from the constant-lightness ab plane into the Lab color space. When applied to the source color gamut, it means that each selected projected gamut color having the following coordinates in the a*b* plane : $a*_{GAMUT}^{SOURCE}, b*_{GAMUT}^{SOURCE}$ is retroprojected into its corresponding gamut color $L*_{GAMUT}^{SOURCE}, a*_{GAMUT}^{SOURCE}, b*_{GAMUT}^{SOURCE}$ . The series of all these selected retroprojected gamut colors forms the searched simplified cusp line.

When applied to the source color gamut, a **simplified source cusp line** is obtained which forms a 3D polygon described by a series of selected source gamut colors which are named **simplified source cusp colors** $L_{S-CUSP}^{SOURCE}, a_{S-CUSP}^{SOURCE}, b_{S-CUSP}^{SOURCE}$ . Such a convex source cusp **line** is illustrated by the white line on figure 2. Basically, according to the above convex hull computing method, the 2D polygon formed by the projection of the obtained simplified source cusp line on the ab plane of constant lightness corresponds to the smallest convex polygon enclosing the projections on the same plane of the vertices describing the source color gamut.

The same process as above is applied to the target color gamut in order to obtain the simplified target cusp line of this target color gamut. Basically, according to this process, the polygon formed by the projection of the obtained simplified target cusp line on the a*b* plane of constant lightness corresponds to the smallest convex polygon enclosing the projection on the same plane of the vertices describing the target color gamut.

The above method to search a simplified source cusp line and a simplified target cusp line to be used as described below to implement a cusp color mapping method is advantageously very simple to implement. Advantageously, this method does not need calculation of a quality criterion to qualify a gamut color to be a cusp color as in the above-quoted method of describing an actual cusp line of the prior art.

As a first variant, it is possible to search the actual source cusp line of the source color gamut for instance using the Stauder's method referenced above, then to project it, then to apply the above convex hull method to the projections of the cusp colors forming this actual source cusp line to get a new polygon that after reprojection gives eventually a **simplified source cusp line.** It is possible to search the simplified target cusp line similarly. The simplified source cusp line and the simplified target cusp line that are obtained through this variant may be different from those obtained through the main embodiment above, but both simplified cusp lines can be used to define the lightness mapping function described in the 2nd step below.

As a second variant, it is possible to calculate the simplified cusp line of the source color gamut from projected sample source colors, instead of the projection of the color gamut like in the main embodiment above or instead of the projection of the cusp colors forming the actual source cusp line like in the first above variant of the main embodiment. These sample source colors can be for instance a set of colors sampled regularly within the source color gamut and being representative of the source. It could be, for instance, for a source corresponding to a display, with 8 bits input RGB values, the L a b values corresponding to (R, G, B) values, where R (or G, or B) takes any value between 0 and 255 with a 32 interval.

The next step is projecting these sample source colors on the above a b plane with constant lightness. Applying the above convex hull method to the projected colors, a new polygon is obtained, that after reprojection gives a simplified cusp line. It is possible to search the simplified target cusp line similarly.

The simplified source cusp line and the simplified target cusp line that are obtained through this second variant may be different from those obtained through the main embodiment above or through the first variant, but the three simplified cusp lines can be used to define the lightness mapping function described in the 2nd step below. A difference of the simplified cusp line obtained by this another variant can be due to the choice, density and distribution of the sample source colors and sample target colors within the source and target color gamuts, respectively.

An advantage of this variant is that the sample source colors and the sample target colors, respectively, can directly be projected and used for the calculation of the simplified cusp line. Especially it is not necessary to calculate a 3D gamut boundary of the source sample colors and of the target sample colors respectively, or to calculate the actual source cusp line or the actual target cusp line respectively.

<u>2nd step: definition of lightness mapping function</u>

Once the simplified source cusp line of the source color gamut and the simplified target cusp line of this target color gamut are obtained at the first step above, a lightness gamut mapping function f can be defined for each leaf of constant hue h comprising source colors to map. For such a definition, one can use for instance the method described in the article entitled "Motion Picture Versioning by Gamut Mapping" by J.Stauder et al., published in November 2010 in the Eighteenth Color and Imaging Conference: Color Science and Engineering Systems, Technologies, and Applications, San Antonio, Texas, p. 178-183. A variation of this method is described below.

Such a lightness mapping function f of a constant-hue leaf should be defined in order to be able to map the lightness L of any source color of this leaf. In reference to figure 4, the intersection D of this leaf with the simplified source cusp line of the source color gamut is named "modified source cusp color" and has the following coordinates $L_{CUSP}^{M-SOURCE}, a_{CUSP}^{M-SOURCE}, b_{CUSP}^{M-SOURCE}$ or $L_{CUSP}^{M-SOURCE}, C_{CUSP}^{M-SOURCE}, h$. Similarly, the intersection P' of this leaf with the simplified target cusp line of the target color gamut is named "modified target cusp color" and has the following coordinates $L_{CUSP}^{M-TARGET}, a_{CUSP}^{M-TARGET}, b_{CUSP}^{M-TARGET}$ or $L_{CUSP}^{M-TARGET}, C_{CUSP}^{M-TARGET}, h$. For the constant-hue leaves intersecting the actual cusp line in its non-convex parts, the intersection with the simplified cusp line is different from the intersection of this leaf with the actual cusp line, as illustrated on figure 4 where D is different from A', and where P' is different from P.

The lightness mapping function f of a constant-hue leaf to be defined to map the lightness L of any source color of this leaf preferably satisfies the following so-called "cusp lightness condition": a source color having the lightness $L_{CUSP}^{M-SOURCE}$ and the chroma $C_{CUSP}^{M-SOURCE}$ of the modified source cusp color of the source color gamut belonging this leaf is lightness mapped in this leaf to a color having the same lightness $L_{CUSP}^{M-TARGET}$ as the cusp color of the target color gamut belonging to this leaf. It means that, in this leaf, the function f is defined such that $f\left(C_{CUSP}^{M-SOURCE}, L_{CUSP}^{M-SOURCE}\right) = L_{CUSP}^{M-TARGET}$ This condition is illustrated on figure 6. Taking this cusp lightness condition into consideration, the lightness mapping function f is then for instance defined according to the following equation:

$$f(C, L) = L + s \qquad \text{(Eq.1)},$$

where the linear lightness offset s is defined as follows:

$$s = tu\left(L_{CUSP}^{M-TARGET} - L_{CUSP}^{M-SOURCE}\right) \qquad \text{(Eq.2)}$$

where the linear lightness weight t and the linear chroma weight u are defined as follows:

$$t = \begin{cases} \dfrac{L - L_B^{SOURCE}}{L_{CUSP}^{M-SOURCE} - L_B^{SOURCE}} & if \quad L \leq L_{CUSP}^{M-SOURCE} \\[4mm] \dfrac{L_W^{SOURCE} - L}{L_W^{SOURCE} - L_{CUSP}^{M-SOURCE}} & if \quad L > L_{CUSP}^{M-SOURCE} \end{cases} \qquad \text{(Eq.3A)}$$

$$u = \dfrac{C}{C_{CUSP}^{M-SOURCE}} \quad \text{(Eq.3B)}$$

where, as already defined above, $L_{CUSP}^{M-SOURCE}$ and $C_{CUSP}^{M-SOURCE}$ are respectively the lightness and the chroma of the source cusp color of this constant-hue leaf in which the mapping function f is defined. The chroma weight u as defined in equation 3B ensures that colors with small chroma values are less lightness mapped than colors with large chroma values. In this way, grey ramps near the L-axis are preserved.

The above "cusp lightness condition" is a key characteristic of a cusp color gamut mapping. Note that, for constant-hue leaves intersecting non-convex parts of the source color gamut, i.e. where the modified source cusp color is out of the source color gamut (see D on figure 4), there is no actual source color to map corresponding to this condition.

A specific lightness gamut mapping function can be defined as described above for each constant-hue leaf of the Lab color space in which there are source colors to map. At the end of this third step, a whole definition of the lightness mapping is obtained.

It should be noticed that, for at least one constant-hue leaf comprising at least one source color to map:

- 1/ when the source color gamut is non-convex, the intersection of this constant-hue leaf with the simplified source cusp line - i.e. the corresponding modified source cusp color - is out of the source color gamut, and/or,
- 2/ when the target color gamut is non-convex, the intersection of this constant-hue leaf with the simplified target cusp line - i.e. the corresponding modified target cusp color - is out of the target color gamut.

Such constant-hue leaf/ves correspond(s) to constant-hue leaf/ves intersecting the boundaries of the color gamut(s) in the region of their non-convexity. Such situations are illustrated on figure 4 which shows D out of the source color gamut and P' out of the target color gamut.

3<sup>rd</sup> step : Lightness mapping by application of the lightness mapping function

The lightness mapping function $f(C,L)$ as defined above is then applied to the lightness of the source colors of the content to map, each color being represented in the mapping color space Lab by the following coordinates: $N = \begin{pmatrix} L \\ a \\ b \end{pmatrix}$.

According to the invention, the lightness mapping function f is applied only to the L coordinate such that the resulting, mapped color has the coordinates $N' = \begin{pmatrix} L' = f(C, L) \\ a' = a \\ b' = b \end{pmatrix}$ with $C = \sqrt{a^2 + b^2}$.

Figure 4 shows an example of application of the lightness mapping function f in a constant-hue leaf LC, where, for instance, the color A is lightness mapped into the color B.

4th step: chroma mapping

The lightness mapped color N' which is obtained at the end of the previous step is an intermediate mapped color. Notably when the intermediate mapped color N' is not located within the target color gamut, this color N' is finally chroma mapped into a target color N" in a way that this target color is inside the target color gamut.

To illustrate such a chroma mapping, an intermediate mapped color N' is chroma mapped into a target color N" in direction to a so-called anchor point $N_0$. In the specific embodiment, this anchor point is positioned on the Lightness axis and has the following coordinates: $N_0 = \begin{pmatrix} L_0 = L' \\ a_0 = 0 \\ b_0 = 0 \end{pmatrix}$ and straight lines anchored on this anchor point are chosen as mapping trajectories for the chroma mapping step. In this specific case, the second mapping does not impact the lightness of the colors.

Such a chroma mapping can be described as a modification of distance K' between an intermediate mapped color N' and the anchor point $N_0$ into a distance K" between the target color N" and the same anchor point $N_0$. In reference to the previous example illustrating on figure 4 the lightness mapping of A into B, B will me chroma mapped into C.

Any other known algorithms can be used for this chroma mapping, such as gamut compression, gamut clipping or gamut expansion.

For intermediate mapped colors N' located within the target color gamut , this 4th step may be optional, notably when these intermediate mapped colors N' populate regularily the target color gamut.

When all intermediate mapped colors N' that are obtained from the 3rd step above are located within the target color gamut, this 4th step is optional.

As a conclusion, the implementation of the above first to fourth steps leads to a global color gamut mapping of all source colors of a content to map from the source color gamut in which they are located to target colors that are generally located inside the target color gamut. The third and fourth steps above can be merged in one step of color gamut mapping impacting both the lightness and the chroma of source colors to map.

The method of color gamut mapping above may have notably the following advantages:

1. The calculation of the simplified cusp lines has low complexity, because it uses a simple projection of a GBD of the source and/or target color gamut in a plane of constant lightness and the implementation of a simple convex hull algorithm in a 2D space.

2. Improvement of continuities of mapping operations over all source colors to map. Notably in hue leafs close to a primary or a secondary color, a simplified cusp line exhibits less discontinuity of curvature than an actual cusp line notably when the color gamut is non-convex and thus improves the continuity of cusp dependent lightness-mapping operations over all source colors to map.

According to a hardware aspect, the invention relates to a device for mapping source colors of a content which are provided in a source color gamut having a black point and a white point into targets colors of a target color gamut. This color mapping device comprises:

-   a simplified-cusp calculation module configured to obtain a simplified source cusp line such that its projection on a plane of constant lightness corresponds to the smallest convex polygon enclosing the projections in said plane of vertices describing said source color gamut and to obtain a simplified target cusp line such that its projection on a plane of constant lightness corresponds to the smallest convex polygon enclosing the projections in said plane of vertices describing said target color gamut,

-   a lightness-mapping function definition module configured to define, for all source colors located in a same constant-hue leaf of hue h , a lightness-mapping function $L' = f(C, L)$ adapted to lightness-map the lightness L of any of these source colors having a chroma C into a lightness L' and meeting a cusp lightness condition:

$$f\left(C_{CUSP}^{M-SOURCE}, L_{CUSP}^{M-SOURCE}\right) = L_{CUSP}^{M-TARGET}$$ , where $L_{CUSP}^{M-SOURCE}$ and $C_{CUSP}^{M-SOURCE}$ are respectively the lightness and the chroma of a modified source cusp color belonging to said leaf, where $L_{CUSP}^{M-TARGET}$ is the lightness of a modified target cusp color belonging to said leaf,

wherein said modified source cusp color and said modified target cusp color correspond respectively to the intersection of said constant-hue leaf with the simplified source cusp line provided by said simplified-cusp calculation module and to the intersection of said constant-hue leaf with the simplified target cusp line provided by said simplified-cusp calculation module, - a lightness-mapping module adapted to apply lightness-mapping function $f(C, L)$ provided by lightness-mapping function definition module to said source colors located in said constant-hue leaf.

The above modules are functional units that may or may not correspond to physically distinguishable units. For example, these modules or some of them can be grouped together in a single component or circuit, or constitute functions of the same software. On the contrary, some modules may be composed of separate physical entities.

This device is implemented according to a purely hardware embodiment, for example in the form of a dedicated component (for example in an ASIC (application specific integrated circuit) or FPGA (field-programmable gate array) or VLSI (very large scale integration) or of several electronic components integrated into a device or even in the form of a mixture of hardware elements and software elements.

When source colors are provided in a color space different from a perceptually uniform color space as the Lab color space, these source colors are transformed in a manner known per se into a representation in a a perceptually uniform color space before being mapped.

While the present invention is described with respect to a particular embodiment, it is understood that the present invention is not limited to this embodiment. The present invention as claimed therefore includes variations from this embodiment described herein, as will be apparent to one of skill in the art.

It is to be further understood that, because some of the constituent system components and methods depicted in the accompanying drawings are preferably implemented in software, the actual connections between the system components or the process function blocks may differ depending upon the manner in which the invention is implemented.

## Claims

1.  Method of color gamut mapping source colors into targets colors from a source color gamut towards a target color gamut in a mapping color space that can be partionned in 2D constant-hue leaves having axes for lightness and for chroma,

    said method comprising mapping the lightness L of each source color having a chroma C and a hue h into a lightness L' of a target color according to a lightness mapping function $L' = f(C,L)$ defined in the constant-hue leaf of hue h such as to meet a cusp lightness condition according to $f\left(C_{CUSP}^{M-SOURCE}, L_{CUSP}^{M-SOURCE}\right) = L_{CUSP}^{M-TARGET}$ , where $L_{CUSP}^{M-SOURCE}$ and $C_{CUSP}^{M-SOURCE}$ are respectively the lightness and the chroma of a modified source cusp color belonging this leaf, where $L_{CUSP}^{M-TARGET}$ is the lightness of a modified target cusp color belonging this leaf,

    wherein said modified source cusp color and said modified target cusp color correspond respectively to the intersection of a simplified source cusp line with said constant-hue leaf and to the intersection of a simplified target cusp line with said constant-hue leaf,

    said method also comprising:

    - obtaining said simplified source cusp line by projecting gamut colors describing said source color gamut in an orthogonal plane of constant lightness, computing said projected gamut colors with a 2D convex hull algorithm resulting in a convex plane polygon formed by projected gamut colors forming the vertices of said convex plane polygon, and retroprojecting said projected gamut colors forming said vertices resulting in source cusp colors forming a polygon describing said simplified source cusp line, and/or
    - obtaining said simplified target cusp line by projecting gamut colors describing said target color gamut in an orthogonal plane of constant lightness, computing said projected gamut colors with a 2D convex hull algorithm resulting in a convex plane polygon formed by projected gamut colors forming the vertices of said convex plane polygon, and retroprojecting said selected projected gamut colors forming said vertices resulting in target cusp colors forming a polygon describing said simplified target cusp line.

2.  Method of color gamut mapping according to claim 1, wherein at least one among said source color gamut and said target color gamut is non-convex, and wherein there is at least one constant-hue leaf in which the modified source cusp color is located out of said source color gamut and/or in which the modified target cusp color is located out of said target color gamut.

3. Color mapping device for mapping source colors of a content which are provided in a source color gamut into targets colors of a target color gamut, comprising:

- a simplified-cusp calculation module configured to obtain a simplified source cusp line such that its projection on a plane of constant lightness corresponds to the smallest convex polygon enclosing the projections in said plane of vertices describing said source color gamut and to obtain a simplified target cusp line such that its projection on a plane of constant lightness corresponds to the smallest convex polygon enclosing the projections in said plane of vertices describing said target color gamut,

- a lightness-mapping function definition module configured to define, for all source colors located in a same constant-hue leaf of hue h , a lightness-mapping function $L' = f(C, L)$ adapted to lightness-map the lightness L of any of these source colors having a chroma C into a lightness L' and meeting a cusp lightness condition according to $f\left(C_{CUSP}^{M-SOURCE}, L_{CUSP}^{M-SOURCE}\right) = L_{CUSP}^{M-TARGET}$ , where $L_{CUSP}^{M-SOURCE}$ and $C_{CUSP}^{M-SOURCE}$ are respectively the lightness and the chroma of a modified source cusp color belonging to said leaf, where $L_{CUSP}^{M-TARGET}$ is the lightness of a modified target cusp color belonging to said leaf,

wherein said modified source cusp color and said modified target cusp color correspond respectively to the intersection of said constant-hue leaf with the simplified source cusp line provided by said simplified-cusp calculation module and to the intersection of said constant-hue leaf with the simplified target cusp line provided by said simplified-cusp calculation module,

- a lightness-mapping module adapted to apply lightness-mapping function $f(C, L)$ provided by lightness-mapping function definition module to said source colors located in said constant-hue leaf.

4. A processor readable medium having stored therein instructions for causing a processor to perform the method of color gamut mapping according to any one of claims 1 to 2.

5. A computer-readable program comprising computer-executable instructions to enable a computer to perform the method of color gamut mapping according to any one of claims 1 to 2.

Fig.1

Fig.2

Fig.3

Fig.4

Europäisches Patentamt

European Patent Office

Office européen des brevets

## EUROPEAN SEARCH REPORT

Application Number

EP 16 17 5989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 375 719 A1 (THOMSON LICENSING [FR]) 12 October 2011 (2011-10-12) | 2,3 | INV.<br>H04N1/60<br>H04N9/67 |
| Y | * paragraph [0026] - paragraph [0047]; figures 3,4 * | 1,4,5 | |
| Y | US 2009/002737 A1 (KUNO MASASHI [JP]) 1 January 2009 (2009-01-01) * paragraph [0181] - paragraph [0186]; figures 20,21 * | 1,4,5 | |

TECHNICAL FIELDS SEARCHED (IPC)

H04N

The present search report has been drawn up for all claims

| Place of search | Date of completion of the search | Examiner |
|---|---|---|
| Munich | 20 October 2016 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 5989

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2016

| Patent document cited in search report | Publication date | Patent family member(s) | Publication date |
|---|---|---|---|
| EP 2375719 A1 | 12-10-2011 | NONE | |
| US 2009002737 A1 | 01-01-2009 | US 2009002737 A1<br>US 2011164265 A1<br>US 2011164266 A1 | 01-01-2009<br>07-07-2011<br>07-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007236761 A
- US 2005248784 A

- EP 2375719 A

### Non-patent literature cited in the description

- **R. J. ROLLESTON.** Visualization of colorimetric calibration. *Proceedings of SPIE,* 1993, vol. 1912, 299-309
- Gamut boundary determination using alpha-shapes. *the Color Imaging Conference,* 1999
- Gamut Mapping for Motion Picture. *Conference on Colour in Graphics, Imaging and Vision,* 14 June 2010

- **J.STAUDER et al.** Motion Picture Versioning by Gamut Mapping. *Eighteenth Color and Imaging Conference: Color Science and Engineering Systems, Technologies, and Applications,* November 2010, 178-183